# EUROPEAN PATENT APPLICATION

(11) **EP 4 610 804 A1**
(43) Date of publication of application: **03.09.2025**
(21) Application number: 23881710.0
(22) Date of filing: 18.10.2023
(51) Int. Cl.: G06F 3/14

(54) **TARGET-IMAGE DISPLAY METHOD AND DISPLAY APPARATUS, AND ELECTRONIC DEVICE AND STORAGE MEDIUM**

(30) Priority: 25.10.2022 CN 202211311383
(71) Applicant: Vivo Mobile Communication Co., Ltd., Dongguan, Guangdong 523863 (CN)
(72) Inventor: SUN, Weikun, Dongguan, Guangdong 523863 (CN)
(74) Representative: Conti, Marco
(86) International application number: PCT/CN2023/125201
(87) International publication number: WO 2024/088132

(57) **Abstract**

This application discloses a target image display method and display apparatus, an electronic device, and a storage medium, pertaining to the technical field of electronic devices. The target image display method includes: receiving an emoji image corresponding to a target image; performing, according to a preset encoding rule, encoding conversion on the emoji image to generate a code corresponding to the emoji image; acquiring a dot matrix font corresponding to the code; and displaying the dot matrix font, where the dot matrix font forms the emoji image; where the dot matrix font is obtained by performing data conversion on the emoji image in advance.

## Description

### CROSS-REFERENCE TO RELATED APPLICATIONS

This application claims priority to Chinese Patent Application No. 202211311383.5, filed in China on October 25, 2022, which is incorporated herein by reference in its entirety.

### TECHNICAL FIELD

This application pertains to the technical field of electronic devices and specifically relates to a target image display method and display apparatus, an electronic device, and a storage medium.

### BACKGROUND

In the related art, wearable devices are limited by the memory and performance of their operating systems. Upon reception of target images, displays of the wearable devices can display only text information but cannot display image content of the target images, or can display only the image content in a form of text. As a result, the user cannot see the target images, thus severely affecting the user experience of the wearable devices.

### SUMMARY

Embodiments of this application are intended to provide a target image display method, an image content processing method, a display apparatus, a processing apparatus, an electronic device, and a readable storage medium, allowing a display of a wearable device to display image content upon reception of a target image including the image content, thereby improving the user experience of the wearable device.

According to a first aspect, an embodiment of this application provides a target image display method. The display method includes:
receiving image content corresponding to a target image;
performing, according to a preset encoding rule, encoding conversion on the image content to generate a code corresponding to the image content;
acquiring a dot matrix font corresponding to the code; and
displaying the dot matrix font, where the dot matrix font forms the target image; where
the dot matrix font is obtained by performing data conversion on the image content in advance.

According to a second aspect, an embodiment of this application provides a target image display apparatus. The display apparatus is applied to a wearable device, where the wearable device includes a display. The display apparatus includes:
a receiving module, configured to receive image content corresponding to a target image;
a conversion module, configured to perform, according to a preset encoding rule, encoding conversion on the image content to generate a code corresponding to the image content;
an acquisition module, configured to acquire a dot matrix font corresponding to the code; and
a display module, configured to display the dot matrix font, where the dot matrix font forms the target image; where
the dot matrix font is obtained by performing data conversion on the image content in advance.

According to a third aspect, an embodiment of this application provides an electronic device including a processor and a memory, where the memory stores a program or instructions capable of running on the processor, and when the program or instructions are executed by the processor, the steps of the method according to the first aspect and/or the second aspect are implemented.

According to a fourth aspect, an embodiment of this application provides a readable storage medium, where the readable storage medium stores a program or instructions, and when the program or instructions are executed by a processor, the steps of the method according to the first aspect and/or the second aspect are implemented.

According to a fifth aspect, an embodiment of this application provides a chip, where the chip includes a processor and a communication interface, the communication interface is coupled to the processor, and the processor is configured to run a program or instructions to implement the steps of the method according to the first aspect.

According to a sixth aspect, an embodiment of this application provides a computer program product, where the program product is stored in a storage medium, and the program product is executed by at least one processor to implement the method according to the first aspect and/or the second aspect.

In the embodiments of this application, the display method can be applied to a wearable device. Upon receiving the image content of the target image, the wearable device first performs, according to the preset encoding rule, encoding conversion on the image content to generate the code corresponding to the image content.

Further, the dot matrix font corresponding to the code is acquired based on the generated code. Specifically, the dot matrix font library is integrated into the operating system of the wearable device. In addition, during integration into the operating system, image content that needs to be displayed by the wearable device is converted into data in advance to obtain a dot matrix font corresponding to the image content, and then the dot matrix font is stored in the dot matrix font library. In this way, when the image content needs to be displayed, the dot matrix font corresponding to the image content can be acquired from the dot matrix font library, and then the dot matrix font is displayed, so that the image content can be displayed on the display of the wearable device, that is, the target image is displayed on the display. It can be understood that as compared to the image data of the image content, the memory occupied by the dot matrix font is much smaller, so the memory and performance on the operating system for acquiring the dot matrix font is much lower. In this way, in a case that the operating system of the wearable device has limited memory and performance, the dot matrix font corresponding to the image content can be acquired, so that the image content is displayed on the display, thereby improving the user experience of the wearable device.

### BRIEF DESCRIPTION OF DRAWINGS

FIG. 1 is a flowchart of a target image display method according to an embodiment of this application;
FIG. 2 is a schematic diagram of distribution of pixels of image content according to an embodiment of this application;
FIG. 3 is a schematic diagram of distribution of pixel positions on a display according to an embodiment of this application;
FIG. 4 is a structural block diagram of a target image display apparatus according to an embodiment of this application;
FIG. 5 is a structural block diagram of an electronic device according to an embodiment of this application; and
FIG. 6 is a schematic diagram of a hardware structure of an electronic device implementing an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that data used in this way are interchangeable in appropriate circumstances such that the embodiments of this application can be implemented in an order other than those illustrated or described herein. In addition, "first" and "second" are typically used to distinguish objects of a same type and do not limit quantities of the objects. For example, there may be one or more first objects. In addition, "and/or" in the specification and claims represents at least one of the connected objects, and the character "/" generally indicates that the contextually associated objects have an "or" relationship.

The following describes in detail a target image display method, an image content processing method, a display apparatus, a processing apparatus, an electronic device, and a readable storage medium provided in the embodiments of this application by using specific embodiments and application scenarios thereof with reference to the accompanying drawings.

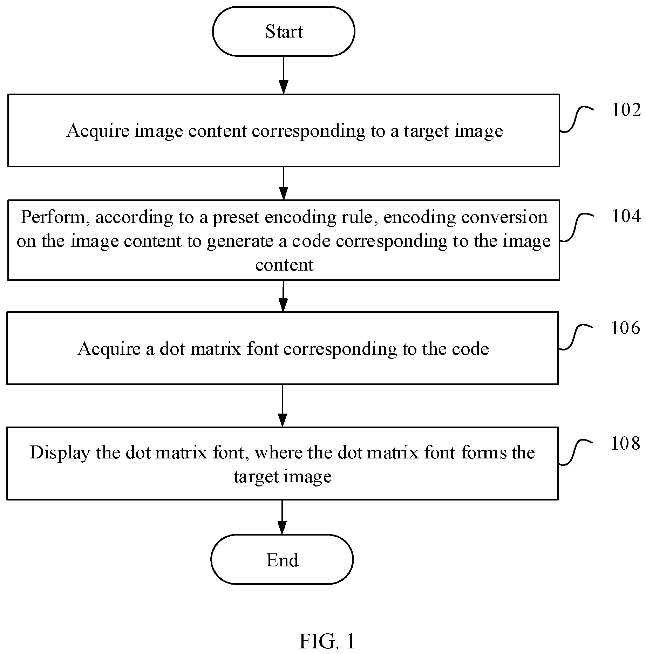

In some embodiments of this application, a target image display method is provided. The display method is applied to a wearable device, where the wearable device includes a display. FIG. 1 is a flowchart of a target image display method according to an embodiment of this application. As shown in FIG. 1, the display method includes the following steps.

Step 102: Receive image content corresponding to a target image.

In step 102, the target image may be sent through application programs by other smart devices, for example, mobile phones, computers, or tablets.

Step 104: Perform, according to a preset encoding rule, encoding conversion on the image content to generate a code corresponding to the image content.

Step 106: Acquire a dot matrix font corresponding to the code.

In step 106, a dot matrix font library may be integrated into an operating system of the wearable device in advance, thereby allowing application programs installed in the operating system to acquire dot matrix fonts from the dot matrix font library.

Step 108: Display the dot matrix font, where the dot matrix font forms the target image.

The dot matrix font is obtained by performing data conversion on the image content in advance.

In this embodiment of this application, upon receiving the image content of the target image, the wearable device first performs, according to the preset encoding rule, encoding conversion on the image content to generate the code corresponding to the image content.

Further, the dot matrix font corresponding to the code is acquired based on the generated code. Specifically, the dot matrix font library is integrated into the operating system of the wearable device. In addition, during integration into the operating system, image content that needs to be displayed by the wearable device is converted into data in advance to obtain a dot matrix font corresponding to the image content, and then the dot matrix font is stored in the dot matrix font library. In this way, when the image content needs to be displayed, the dot matrix font corresponding to the image content can be acquired from the dot matrix font library, and then the dot matrix font is displayed, so that the image content can be displayed on the display of the wearable device, that is, the target image is displayed on the display.

It can be understood that the image content is typically image data, such as image data in PNG format. When the image content is displayed, the operating system needs to have adequate memory and performance to ensure that the image data can be smoothly acquired and displayed on the display. However, in a case that the operating system has limited memory and performance, the image data of the image content is stored in a form of dot matrix font, so that the memory occupied by the image content can be reduced. For example, 2³² (4 bytes) data of each pixel in a 32-bit PNG image is compressed and converted into 2⁸ (1 byte) dot matrix font for storage. That is, as compared to the image data of the image content, the memory occupied by the dot matrix font is much smaller, so the memory and performance on the operating system for acquiring the dot matrix font is much lower. In this way, in a case that the operating system of the wearable device has limited memory and performance, the dot matrix font corresponding to the image content can be acquired, so that the image content is displayed on the display, thereby improving the user experience of the wearable device.

Specifically, the wearable device may include a smartwatch. The smartwatch is integrated with a real-time operating system (Real Time Operating System, RTOS). Through the target image display method of this application, the real-time operating system can smoothly display the received image content, thereby improving the user experience of the smartwatch.

In some embodiments of this application, the step of acquiring a dot matrix font corresponding to the code includes:
acquiring a font name of the dot matrix font; and
determining the font name corresponding to the code and acquiring a dot matrix font corresponding to the font name; where
the font name is generated by naming the image content according to the preset encoding rule before performing data conversion on the image content.

In the embodiments of this application, when the dot matrix font corresponding to the code is acquired from the dot matrix font library, the font name of the dot matrix font is acquired first. The font name of the dot matrix font is generated in advance. Specifically, a name of the image content is encoded according to the preset encoding rule to generate the font name. Further, the dot matrix font with the font name the same as the code is acquired, and then the dot matrix font is displayed on the display, thereby displaying the image content.

Specifically, the preset encoding rule used when the encoding conversion is performed on the image content of the received target image is the same as an encoding rule used when an image name of the image content is encoded. Furthermore, the encoding rule is specifically formulated by an image content developer for the image content, so the font name obtained by encoding the name of the image content is in one-to-one correspondence with the code obtained by performing encoding conversion on the image content of the received target image. Thus, it can be determined that a dot matrix font with a font name corresponding to the code is a dot matrix font corresponding to the image content included in the target image. The dot matrix font is displayed on the display, so that the image content can be displayed.

Taking image content of an emoji image as an example, according to the settings by an emoji image developer, each emoji image is encoded with a unique (or uniquely combined) Unicode code, and a corresponding Unicode international standard range is 0001F600-0001F64F. When an emoji image is received, image content is also subjected to encoding conversion according to a Unicode encoding rule. Therefore, a code of the image content obtained by the encoding conversion is also within the above code range, such as 0000E000. Then, a font name of each dot matrix font is acquired to determine the font name of a dot matrix font that is also 0000E000. This dot matrix font is a dot matrix font corresponding to the received image content, and this dot matrix font is displayed on the display, so that the emoji image corresponding to the received image content can be displayed.

In some embodiments of this application, the image content includes a dynamic image, the dynamic image including multiple image frames, where each image frame is subjected to data conversion in advance to generate a corresponding dot matrix font, and before each image frame is subjected to data conversion, each image frame is named within a continuous code range according to the preset encoding rule.

The step of acquiring a dot matrix font corresponding to the code further includes:
acquiring dot matrix fonts corresponding to other font names that are within the same code range as the font name.

In this embodiment of this application, the image content of the target image received by the wearable device may further include a dynamic image. Specifically, the dynamic image includes multiple image frames which are images that need to be displayed in frames of the dynamic image. The image frames are continuously displayed on a time axis to form the dynamic image. Correspondingly, when the dynamic image is placed into the dot matrix font library, each image frame of the dynamic image undergoes data conversion to obtain a dot matrix font for each image frame, and then the dot matrix font is stored in the dot matrix font library. Furthermore, font names of dot matrix fonts of multiple image frames of one dynamic image are obtained by encoding an image name of the dynamic image within a continuous code range according to the preset encoding rule. That is, the font names of the dot matrix fonts of the multiple image frames are within the same continuous code range.

Further, in a case that the received image content includes a dynamic image, an image name of the dynamic image is first subjected to encoding conversion according to the preset encoding rule to generate a code, and then a font name corresponding to the code is determined. In addition, since the dynamic image includes multiple image frames, it is also necessary to determine other font names within the same code range as the font name, thereby determining a dot matrix font corresponding to each image frame of the dynamic image. This ensures that each image frame of the dynamic image can be displayed on the display, that is, ensuring the display effect of the dynamic image.

An emoji image is still used as an example. A dynamic image of one emoji image includes five image frames, and font names of a dot matrix font corresponding to each image frame are "0000E000", "0000E001", "0000E002", "0000E003", and "0000E004". A code 0000E000 is obtained after encoding conversion of a name of the dynamic image. Therefore, it is determined that a dot matrix font with a font name being 0000E000 and four dot matrix fonts being "0000E001", "0000E002", "0000E003", and "0000E004" within the same code range as the dot matrix font are the dot matrix fonts that need to be acquired.

Further, the step of displaying the dot matrix font on the display includes: cyclically displaying in sequence, according to a display sequence of the multiple image frames, multiple dot matrix fonts respectively corresponding to the multiple image frames on the display.

In this embodiment, after the dot matrix font corresponding to each image frame of the dynamic image is determined, the dot matrix font can be acquired and displayed on the display. In addition, to ensure the playback effect of the dynamic image, the dot matrix font corresponding to each image frame can be retrieved sequentially according to the display sequence of the multiple image frames of the dynamic image and displayed sequentially on the display. That is, after one dot matrix font is displayed, the display of a current dot matrix font is canceled, and a next dot matrix font is displayed, thereby implementing the display of the dynamic image.

Further, after the last dot matrix font is displayed, the display of the dot matrix font is canceled, and the first dot matrix font is displayed. That is, multiple dot matrix fonts are acquired cyclically and displayed according to the display sequence, thereby implementing the cyclic playback of the dynamic image and ensuring the playback effect of the dynamic image.

In some embodiments of this application, the image content includes multiple pixels. The dot matrix font includes multiple pieces of pixel data. The multiple pieces of pixel data are in one-to-one correspondence with the multiple pixels.

The step of displaying the dot matrix font on the display includes:
filling, according to an arrangement sequence of the multiple pixels, the pixel data corresponding to each pixel into a corresponding pixel position on the display.

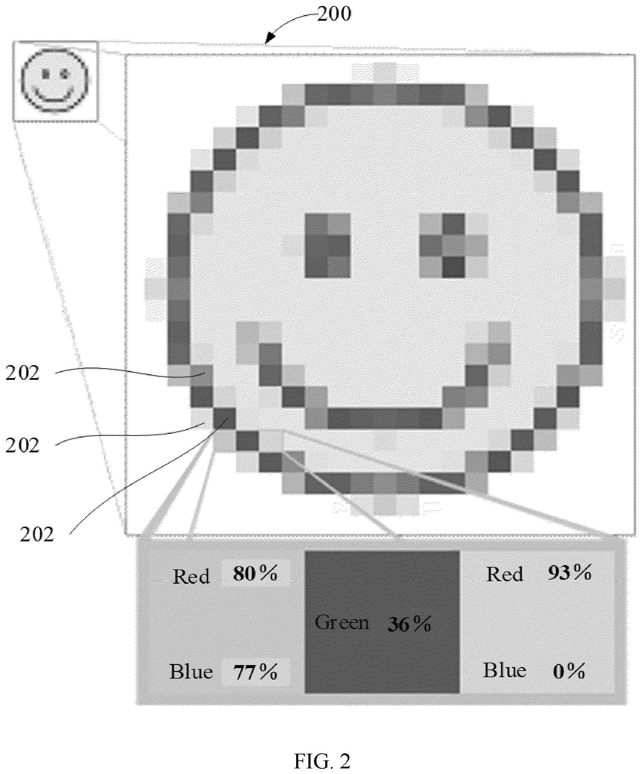

In an embodiment of this application, as shown in FIG. 2, FIG. 2 is a schematic diagram of distribution of pixels of image content according to an embodiment of this application. The image content 200 may include multiple pixels 202. Correspondingly, in a case that the image content 200 is stored in a form of dot matrix font, each dot matrix font includes multiple pieces of pixel data, and the multiple pieces of pixel data are in one-to-one correspondence with the multiple pixels 202.

Further, after a dot matrix font that needs to be acquired is determined, an arrangement sequence of the multiple pixels 202 of the image content 200 can be determined first, and then pixel data corresponding to each pixel 202 is filled into a corresponding pixel position on the display, thereby implementing display of font data on the display, that is, implementing display of the image content 200. That is, the pixel data of each pixel 202 can be directly acquired and filled without other conversions. In addition, the pixel data occupies small memory, imposing low requirements on the memory and performance of the operating system, thereby ensuring the smooth display of the image content 200.

Specifically, the display includes multiple pixel positions arranged in an array, and each pixel position is composed of three sub-pixels: a red sub-pixel, a green sub-pixel, and a blue sub-pixel. Adjusting a proportion of each sub-pixel can determine a color of the pixel position to display a corresponding color.

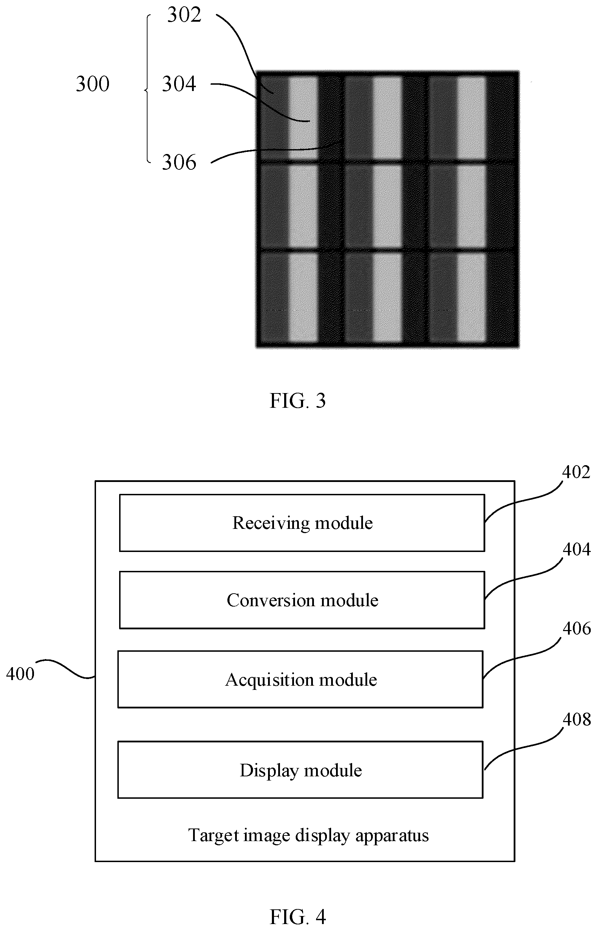

Further, as shown in FIG. 3, FIG. 3 is a schematic diagram of distribution of pixel positions on a display according to an embodiment of this application. Each pixel position 300 on the display can be used for filling each piece of pixel data of a dot matrix font. In addition, based on pixel data filled into the pixel position 300, the wearable device can control proportions of a red sub-pixel 302, a green sub-pixel 304, and a blue sub-pixel 306 of each pixel position 300. After pixel data corresponding to all pixels 202 of one image content 200 are filled into corresponding pixel positions 300 according to an arrangement sequence, the image content 200 is displayed.

In some embodiments of this application, before the acquiring image content corresponding to a target image, a processing method includes the following steps.

A file name is specified for the image content according to a preset naming rule.

The preset naming rule may be an encoding rule for the image content, and a name is specified for the image content according to the encoding rule to obtain a file name of an emoji file. Specifically, the encoding rule is specifically formulated by an image content developer for the image content, so a process of specifying a name for the image content or performing encoding conversion on the image content is performed according to the encoding rule. Therefore, the obtained name or code is in one-to-one correspondence with each other, thereby ensuring that the corresponding image content can be determined based on the name or the code.

The image content is converted into a dot matrix font.

The dot matrix font is integrated into a dot matrix font library.

The dot matrix font includes bitmap binary information, and the file name of the image content is in one-to-one correspondence with the bitmap binary information.

In the embodiments of this application, the image content is converted into the dot matrix font, and the dot matrix font is integrated into the dot matrix font library, so that when the image content needs to be displayed, the dot matrix font corresponding to the image content is directly acquired and displayed on the display.

It can be understood that the image content is typically image data, such as image data in PNG format. When the image content is displayed, the operating system needs to have adequate memory and performance to ensure that the image data can be smoothly acquired and displayed on the display. However, in a case that the operating system has limited memory and performance, the image data of the image content is stored in a form of dot matrix font, so that the memory occupied by the image content can be reduced. In this way, in a case that the operating system of the electronic device has limited memory and performance, the dot matrix font corresponding to the image content can be acquired, so that the image content is displayed on the display, thereby improving the user experience.

Specifically, the dot matrix font may include bitmap binary information. For example, through a font editing tool, 2³² (4 bytes) data of each pixel in a 32-bit PNG image is compressed and converted into 2⁸ (1 byte) bitmap binary information for storage. In addition, during the conversion process, the bitmap binary information still uses the file name of the image. The converted bitmap binary information is in one-to-one correspondence with the file name of the image. Thus, when the bitmap binary information is acquired, the corresponding bitmap binary information of the image data can be determined based on the name, ensuring the accuracy of the image display.

In some embodiments of this application, the image content includes a dynamic image, and the dynamic image includes multiple image frames.

The step that a file name is specified for the image content according to a preset naming rule includes:
specifying, according to the preset naming rule, a file name for each image frame of the dynamic image within a continuous naming range.

In the embodiments of this application, image content to be processed may be a dynamic image. Specifically, the dynamic image includes multiple image frames which are images that need to be displayed in frames of the dynamic image. The image frames are continuously displayed on a time axis to form the dynamic image. Correspondingly, when a file name is specified for the image, a file name needs to be specified for each image frame of the dynamic image according to the preset naming rule. Specifically, the file name is specified for each image frame within the continuous naming range. Then, each image frame is converted into a dot matrix font, and the dot matrix font is integrated into the dot matrix font library.

In this way, when the dynamic image is displayed, the dot matrix font corresponding to each image frame can be acquired, and the dot matrix font corresponding to each image frame can be displayed sequentially on the display according to the play sequence, thereby implementing the display of the dynamic image. File names of multiple image frames of a same dynamic image are within a same naming range. Therefore, when dot matrix fonts are acquired, all dot matrix fonts with file names within a same naming range can be determined, ensuring that the dot matrix font corresponding to each image frame of the dynamic image can be acquired, thereby ensuring the display effect of the dynamic image.

In some embodiments of this application, before the step that a file name is specified for the image content according to a preset naming rule, the processing method further includes:
compressing the image content in response to a compression instruction.

In the embodiments of this application, for image content occupying a large memory, the image content can be compressed before converted into a dot matrix font, that is, the number of pixels in the image content is reduced. It can be understood that the image content may include multiple pixels. A larger memory occupied by the image content indicates that the image content includes more pixels. In addition, when the image content is stored in the form of dot matrix font, each dot matrix font includes multiple pieces of pixel data, and the multiple pieces of pixel data are in one-to-one correspondence with the multiple pixels. Therefore, the image content is compressed, so that the number of pixels in the image content is reduced, that is, the number of dot matrix fonts is reduced, thereby further reducing the requirements on the memory and performance of the operating system in the process of acquiring the dot matrix fonts, and ensuring that the image content can be smoothly displayed.

The target image display method provided in the embodiments of this application may be executed by a target image display apparatus. In the embodiments of this application, a target image display apparatus provided in an embodiment of this application is described by using the target image display method being executed by the target image display apparatus as an example.

In some embodiments of this application, a target image display apparatus is provided. The display apparatus is applied to a wearable device, where the wearable device includes a display. FIG. 4 is a structural block diagram of a target image display apparatus 400 according to an embodiment of this application. As shown in FIG. 4, the display apparatus includes:
a receiving module 402, configured to receive image content corresponding to a target image;
a conversion module 404, configured to perform, according to a preset encoding rule, encoding conversion on the image content to generate a code corresponding to the image content;
an acquisition module 406, configured to acquire a dot matrix font corresponding to the code; and
a display module 408, configured to display the dot matrix font, where the dot matrix font forms the image content; where
the dot matrix font is obtained by performing data conversion on the image content in advance.

In this embodiment of this application, upon receiving the image content, the wearable device first performs, according to the preset encoding rule, encoding conversion on the image content to generate the code corresponding to the image content.

Further, the dot matrix font corresponding to the code is acquired based on the generated code. Specifically, a dot matrix font library is integrated into the operating system of the wearable device. In addition, during integration into the operating system, image content that needs to be displayed by the wearable device is converted into data in advance to obtain a dot matrix font corresponding to the image content, and then the dot matrix font is stored in the dot matrix font library. In this way, when the image content needs to be displayed, the dot matrix font corresponding to the image content can be acquired from the dot matrix font library, and then the dot matrix font is acquired, so that the image content can be displayed on the display of the wearable device, that is, the image content included in the target image is displayed on the display. It can be understood that as compared to the image data of the image content, the memory occupied by the dot matrix font is much smaller, so the memory and performance on the operating system for acquiring the dot matrix font is much lower. In this way, in a case that the operating system of the wearable device has limited memory and performance, the dot matrix font corresponding to the image content can be acquired, so that the image content is displayed on the display, thereby improving the user experience of the wearable device.

In this embodiment of this application, the acquisition module 406 is specifically configured to:
acquire a font name of the dot matrix font; and
determine the font name corresponding to the code and acquire a dot matrix font corresponding to the font name; where
the font name is generated by naming the image content according to the preset encoding rule before performing data conversion on the image content.

In this embodiment of this application, the preset encoding rule used when the encoding conversion is performed on the image content of the received target image is the same as an encoding rule used when an image name of the image content is encoded. Furthermore, the encoding rule is specifically formulated by an image content developer for the image content, so the font name obtained by encoding the image content is in one-to-one correspondence with the code obtained by performing encoding conversion on the image content of the received target image. Thus, it can be determined that a dot matrix font with a font name corresponding to the code is a dot matrix font corresponding to the image content included in the target image. The dot matrix font is displayed on the display, so that the image content can be displayed.

In some embodiments of this application, the image content includes a dynamic image, the dynamic image including multiple image frames, where each image frame is subjected to data conversion in advance to generate a corresponding dot matrix font, and before each image frame is subjected to data conversion, each image frame is named within a continuous code range according to the preset encoding rule.

The acquisition module 406 is specifically configured to acquire dot matrix fonts corresponding to other font names that are within the same code range as the font name.

In this embodiment of this application, in a case that the received target image includes a dynamic image, an image name of the dynamic image is first subjected to encoding conversion within a continuous code range according to the preset encoding rule to generate a code, and then a font name corresponding to the code is determined. In addition, since the dynamic image includes multiple image frames, it is also necessary to determine other font names within the same code range as the font name, thereby determining a dot matrix font corresponding to each image frame of the dynamic image. This ensures that each image frame of the dynamic image can be displayed on the display, that is, ensuring the display effect of the dynamic image.

Further, the display module 408 is configured to:
cyclically display in sequence, according to a display sequence of the multiple image frames, multiple dot matrix fonts respectively corresponding to the multiple image frames on the display.

In this embodiment, after the dot matrix font corresponding to each image frame of the dynamic image is determined, the dot matrix font can be acquired and displayed on the display. In addition, to ensure the playback effect of the dynamic image, the dot matrix font corresponding to each image frame can be retrieved sequentially according to the display sequence of the multiple image frames of the dynamic image and displayed sequentially on the display. That is, after one dot matrix font is displayed, the display of a current dot matrix font is canceled, and a next dot matrix font is displayed, thereby implementing the display of the dynamic image.

Further, after the last dot matrix font is displayed, the display of the dot matrix font is canceled, and the first dot matrix font is displayed. That is, multiple dot matrix fonts are acquired cyclically and displayed according to the display sequence, thereby implementing the cyclic playback of the dynamic image and ensuring the playback effect of the dynamic image.

In some embodiments of this application, the image content includes multiple pixels. The dot matrix font includes multiple pieces of pixel data. The multiple pieces of pixel data are in one-to-one correspondence with the multiple pixels.

The display module 408 is specifically configured to:
fill, according to an arrangement sequence of the multiple pixels, the pixel data corresponding to each pixel into a corresponding pixel position on the display.

In the embodiments of this application, after a dot matrix font that needs to be acquired is determined, an arrangement sequence of the multiple pixels of the image content can be determined first, and then the pixel data corresponding to each pixel is filled into the corresponding pixel position on the display, thereby implementing display of font data on the display, that is, implementing display of the image content. That is, the pixel data of each pixel can be directly acquired and filled without other conversions. In addition, the pixel data occupies small memory, imposing low requirements on the memory and performance of the operating system, thereby ensuring the smooth display of the image content.

An image content processing method provided in an embodiment of this application may be executed by an image content processing apparatus. In the embodiments of this application, an image content processing apparatus provided in an embodiment of this application is described using the image content processing apparatus performing the image content processing method as an example.

In some embodiments of this application, the processing apparatus further includes:
a naming module, configured to specify a file name for image content according to a preset naming rule before receiving image content corresponding to a target image;
a conversion module, configured to convert the image content into a dot matrix font; and
an integration module, configured to integrate the dot matrix font into a dot matrix font library; where
the dot matrix font includes bitmap binary information, and the file name of the image content is in one-to-one correspondence with the bitmap binary information.

In the embodiments of this application, the image content is converted into the dot matrix font, and the dot matrix font is integrated into the dot matrix font library, so that when the image content needs to be displayed, the dot matrix font corresponding to the image content is directly acquired and displayed on the display. In this way, in a case that the operating system of the electronic device has limited memory and performance, the dot matrix font corresponding to the image content can be acquired, so that the image content is displayed on the display, thereby improving the user experience.

In some embodiments of this application, the image content includes a dynamic image, and the dynamic image includes multiple image frames.

The naming module is specifically configured to specify, according to the preset naming rule, a file name for each image frame of the dynamic image within a continuous naming range.

In the embodiments of this application, image content to be processed may be a dynamic image. Specifically, the dynamic image includes multiple image frames which are images that need to be displayed in frames of the dynamic image. The image frames are continuously displayed on a time axis to form the dynamic image. Correspondingly, when a file name is specified for the image, a file name needs to be specified for each image frame of the dynamic image according to the preset naming rule. Specifically, the file name is specified for each image frame within the continuous naming range. Then, each image frame is converted into a dot matrix font, and the dot matrix font is integrated into the dot matrix font library.

In this way, when the dynamic image is displayed, the dot matrix font corresponding to each image frame can be acquired, and the dot matrix font corresponding to each image frame can be displayed sequentially on the display according to the play sequence, thereby implementing the display of the dynamic image. File names of multiple image frames of a same dynamic image are within a same naming range. Therefore, when dot matrix fonts are acquired, all dot matrix fonts with file names within a same naming range can be determined, ensuring that the dot matrix font corresponding to each image frame of the dynamic image can be acquired, thereby ensuring the display effect of the dynamic image.

In some embodiments of this application, the processing apparatus further includes:
a compression module, configured to compress image content in response to a compression instruction.

In the embodiments of this application, for image content occupying a large memory, the image content can be compressed before converted into a dot matrix font, that is, the number of pixels in the image content is reduced. It can be understood that the image content may include multiple pixels. A larger memory occupied by the image content indicates that the image content includes more pixels. In addition, when the image content is stored in the form of dot matrix font, each dot matrix font includes multiple pieces of pixel data, and the multiple pieces of pixel data are in one-to-one correspondence with the multiple pixels. Therefore, the image content is compressed, so that the number of pixels in the image content is reduced, that is, the number of dot matrix fonts is reduced, thereby further reducing the requirements on the memory and performance of the operating system in the process of acquiring the dot matrix fonts, and ensuring that the image content can be smoothly displayed.

The target image display apparatus and the image content processing apparatus in the embodiments of this application may each be an electronic device, or may be a component, for example, an integrated circuit, or a chip in the electronic device. The electronic device may be a terminal or other devices than terminals. For example, the electronic device may be a mobile phone, a tablet computer, a notebook computer, a palmtop computer, a vehicular electronic device, a mobile internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, a personal digital assistant (personal digital assistant, PDA), or the like; and the electronic device may be a server, a network attached storage (Network Attached Storage, NAS), a personal computer (personal computer, PC), a television (television, TV), a teller machine, a self-service machine, or the like. This is not specifically limited in the embodiment of this application.

The target image display apparatus and the image content processing apparatus in the embodiments of this application may each be an apparatus having an operating system. The operating system may be an android (Android) operating system, an iOS operating system, or other possible operating systems. This is not specifically limited in the embodiments of this application.

The target image display apparatus provided in the embodiments of this application can implement the processes implemented in the foregoing target image display method embodiments. The image content processing apparatus provided in the embodiments of this application can implement the processes implemented in the foregoing image content processing method embodiments. To avoid repetition, details are not described herein again.

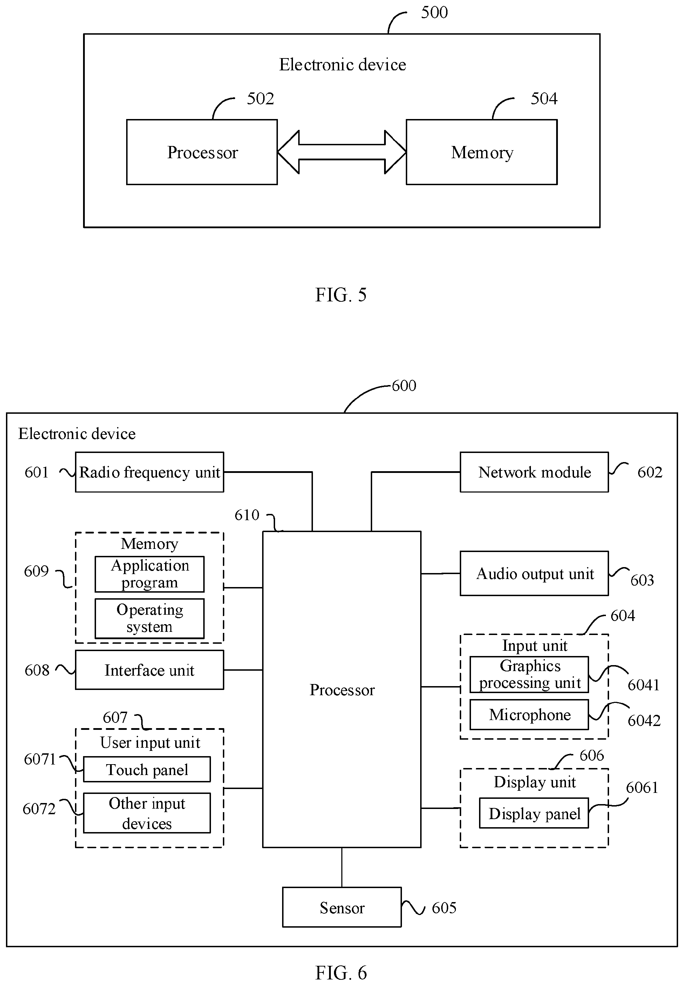

Optionally, an embodiment of this application further provides an electronic device. FIG. 5 is a structural block diagram of an electronic device according to an embodiment of this application. As shown in FIG. 5, the electronic device 500 includes a processor 502, a memory 504, and a program or instructions stored in the memory 504 and capable of running on the processor 502, where when the program or instructions are executed by the processor 502, the processes of the foregoing method embodiments are implemented, with the same technical effects achieved. To avoid repetition, details are not described herein again.

It should be noted that the electronic device in this embodiment of this application includes the foregoing mobile electronic device and non-mobile electronic device.

FIG. 6 is a schematic diagram of a hardware structure of an electronic device implementing an embodiment of this application.

The electronic device 600 includes but is not limited to components such as a radio frequency unit 601, a network module 602, an audio output unit 603, an input unit 604, a sensor 605, a display unit 606, a user input unit 607, an interface unit 608, a memory 609, and a processor 610.

It can be understood by persons skilled in the art that the electronic device 600 may further include a power supply (for example, a battery) supplying power to the components. The power supply may be logically connected to the processor 610 via a power management system, so that functions such as charge management, discharge management, and power consumption management are implemented via the power management system. The structure of the electronic device shown in FIG. 6 does not constitute any limitation on the electronic device. The electronic device may include more or fewer components than shown in the figure, or combine some of the components, or have different arrangements of the components. Details are not described herein.

The user input unit 607 is configured to receive image content corresponding to a target image.

The processor 610 is configured to: perform, according to a preset encoding rule, encoding conversion on the image content to generate a code corresponding to the image content; acquire a dot matrix font corresponding to the code; and display the dot matrix font, where the dot matrix font forms the image content; where the dot matrix font is obtained by performing data conversion on the image content in advance.

In this embodiment of this application, upon reception of the image content, the image content is first subjected to encoding conversion according to the preset encoding rule to generate the code corresponding to the image content.

Further, the dot matrix font corresponding to the code is acquired based on the generated code. Specifically, a dot matrix font library is integrated into an operating system of a wearable device. In addition, during integration into the operating system, image content that needs to be displayed by the wearable device is converted into data in advance to obtain a dot matrix font corresponding to the image content, and then the dot matrix font is stored in the dot matrix font library. In this way, when the image content needs to be displayed, the dot matrix font corresponding to the image content can be acquired from the dot matrix font library, and then the dot matrix font is acquired, so that the image content can be displayed on a display of the wearable device, that is, the image content included in the target image is displayed on the display. It can be understood that as compared to the image data of the image content, the memory occupied by the dot matrix font is much smaller, so the memory and performance on the operating system for acquiring the dot matrix font is much lower. In this way, in a case that the operating system of the wearable device has limited memory and performance, the dot matrix font corresponding to the image content can be acquired, so that the image content is displayed on the display, thereby improving the user experience of the wearable device.

Optionally, the processor 610 is further configured to: acquire a font name of the dot matrix font; and determine the font name corresponding to the code and acquire a dot matrix font corresponding to the font name; where the font name is generated by naming the image content according to the preset encoding rule before performing data conversion on the image content.

In this embodiment of this application, the preset encoding rule used when the encoding conversion is performed on the image content of the received target image is the same as an encoding rule used when an image name of the image content is encoded. Furthermore, the encoding rule is specifically formulated by an image content developer for the image content, so the font name obtained by encoding the image content is in one-to-one correspondence with the code obtained by performing encoding conversion on the image content of the received target image. Thus, it can be determined that a dot matrix font with a font name corresponding to the code is a dot matrix font corresponding to the image content included in the target image. The dot matrix font is displayed on the display, so that the image content can be displayed.

Optionally, the image content includes a dynamic image, the dynamic image including multiple image frames, where each image frame is subjected to data conversion in advance to generate a corresponding dot matrix font, and before each image frame is subjected to data conversion, each image frame is named within a continuous code range according to the preset encoding rule. The processor 610 is further configured to acquire dot matrix fonts corresponding to other font names that are within the same code range as the font name.

In this embodiment of this application, in a case that the received target image includes a dynamic image, an image name of the dynamic image is first subjected to encoding conversion within a continuous code range according to the preset encoding rule to generate a code, and then a font name corresponding to the code is determined. In addition, since the dynamic image includes multiple image frames, it is also necessary to determine other font names within the same code range as the font name, thereby determining a dot matrix font corresponding to each image frame of the dynamic image. This ensures that each image frame of the dynamic image can be displayed on the display, that is, ensuring the display effect of the dynamic image.

Optionally, the display unit 606 is configured to cyclically display in sequence, according to a display sequence of the multiple image frames, multiple dot matrix fonts corresponding to the multiple image frames on the display.

In this embodiment, after the dot matrix font corresponding to each image frame of the dynamic image is determined, the dot matrix font can be acquired and displayed on the display. In addition, to ensure the playback effect of the dynamic image, the dot matrix font corresponding to each image frame can be retrieved sequentially according to the display sequence of the multiple image frames of the dynamic image and displayed sequentially on the display. That is, after one dot matrix font is displayed, the display of a current dot matrix font is canceled, and a next dot matrix font is displayed, thereby implementing the display of the dynamic image.

Further, after the last dot matrix font is displayed, the display of the dot matrix font is canceled, and the first dot matrix font is displayed. That is, multiple dot matrix fonts are acquired cyclically and displayed according to the display sequence, thereby implementing the cyclic playback of the dynamic image and ensuring the playback effect of the dynamic image.

Optionally, the image content includes multiple pixels. The dot matrix font includes multiple pieces of pixel data. The multiple pieces of pixel data are in one-to-one correspondence with the multiple pixels. The display unit 606 is further configured to fill, according to an arrangement sequence of the multiple pixels, the pixel data corresponding to each pixel into a corresponding pixel position on the display.

In this embodiment of this application, after a dot matrix font that needs to be acquired is determined, an arrangement sequence of the multiple pixels of the image content can be determined first, and then the pixel data corresponding to each pixel is filled into the corresponding pixel position on the display, thereby implementing display of font data on the display, that is, implementing display of the image content. That is, the pixel data of each pixel can be directly acquired and filled without other conversions. In addition, the pixel data occupies small memory, imposing low requirements on the memory and performance of the operating system, thereby ensuring the smooth display of the image content.

Optionally, the processor 610 is further configured to: specify a file name for the image content according to a preset naming rule; convert the image content into the dot matrix font; and integrate the dot matrix font into a dot matrix font library; where the dot matrix font includes bitmap binary information, and the file name of the image content is in one-to-one correspondence with the bitmap binary information.

In this embodiment of this application, the image content is converted into the dot matrix font, and the dot matrix font is integrated into the dot matrix font library, so that when the image content needs to be displayed, the dot matrix font corresponding to the image content is directly acquired and displayed on the display. In this way, in a case that the operating system of the electronic device has limited memory and performance, the dot matrix font corresponding to the image content can be acquired, so that the image content is displayed on the display, thereby improving the user experience.

Optionally, the image content includes a dynamic image, and the dynamic image includes multiple image frames. The processor 610 is further configured to specify, according to the preset naming rule, a file name for each image frame of the dynamic image within a continuous naming range.

In this embodiment of this application, image content to be processed may be a dynamic image. Specifically, the dynamic image includes multiple image frames which are images that need to be displayed in frames of the dynamic image. The image frames are continuously displayed on a time axis to form the dynamic image. Correspondingly, when a file name is specified for the image, a file name needs to be specified for each image frame of the dynamic image according to the preset naming rule. Specifically, the file name is specified for each image frame within the continuous naming range. Then, each image frame is converted into a dot matrix font, and the dot matrix font is integrated into the dot matrix font library.

In this way, when the dynamic image is displayed, the dot matrix font corresponding to each image frame can be acquired, and the dot matrix font corresponding to each image frame can be displayed sequentially on the display according to the play sequence, thereby implementing the display of the dynamic image. File names of multiple image frames of a same dynamic image are within a same naming range. Therefore, when dot matrix fonts are acquired, all dot matrix fonts with file names within a same naming range can be determined, ensuring that the dot matrix font corresponding to each image frame of the dynamic image can be acquired, thereby ensuring the display effect of the dynamic image.

Optionally, the processor 610 is further configured to compress image content in response to a compression instruction.

In this embodiment of this application, for image content occupying a large memory, the image content can be compressed before converted into a dot matrix font, that is, the number of pixels in the image content is reduced. It can be understood that the image content may include multiple pixels. A larger memory occupied by the image content indicates that the image content includes more pixels. In addition, when the image content is stored in the form of dot matrix font, each dot matrix font includes multiple pieces of pixel data, and the multiple pieces of pixel data are in one-to-one correspondence with the multiple pixels. Therefore, the image content is compressed, so that the number of pixels in the image content is reduced, that is, the number of dot matrix fonts is reduced, thereby further reducing the requirements on the memory and performance of the operating system in the process of acquiring the dot matrix fonts, and ensuring that the image content can be smoothly displayed.

It should be understood that in this embodiment of this application, the input unit 604 may include a graphics processing unit (graphics processing unit, GPU) 6041 and a microphone 6042. The graphics processing unit 6041 processes image data of a static picture or a video that is obtained by an image capture apparatus (for example, a camera) in a video capture mode or an image capture mode. The display unit 606 may include a display panel 6061. The display panel 6061 may be configured in a form of a liquid crystal display, an organic light-emitting diode display, or the like. The user input unit 607 includes at least one of a touch panel 6071 and other input devices 6072. The touch panel 6071 is also referred to as a touchscreen. The touch panel 6071 may include two parts: a touch detection apparatus and a touch controller. The other input devices 6072 may include but are not limited to a physical keyboard, a function button (for example, a volume control button or an on/off button), a trackball, a mouse, and a joystick. Details are not described herein.

The memory 609 may be configured to store a software program and various data. The memory 609 may mainly include a first storage area for storing a program or instructions and a second storage area for storing data. The first storage area may store an operating system, an application program or instructions required by at least one function (for example, a sound play function or an image play function), and the like. In addition, the memory 609 may be a volatile memory or a non-volatile memory, or the memory 609 may include both a volatile memory and a non-volatile memory. The non-volatile memory may be a read-only memory (Read-Only Memory, ROM), a programmable read-only memory (Programmable PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synchlink DRAM, SLDRAM), and a direct rambus random access memory (Direct Rambus RAM, DRRAM). The memory 609 in this embodiment of this application includes but is not be limited to these or any other applicable types of memories.

The processor 610 may include one or more processing units. Optionally, the processor 610 may integrate an application processor and a modem processor. The application processor mainly processes operations involving an operating system, a user interface, application programs, and the like. The modem processor mainly processes wireless communication signals, for example, being a baseband processor. It can be understood that the modem processor may alternatively be not integrated in the processor 610.

An embodiment of this application further provides a readable storage medium. The readable storage medium stores a program or instructions. When the program or instructions are executed by a processor, the processes of the target image display method and the image content processing method in the foregoing embodiments, with the same technical effects achieved. To avoid repetition, details are not described herein again.

The processor is a processor in the electronic device described in the foregoing embodiments. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or instructions to implement the processes of the target image display method and the image content processing method in the foregoing embodiments, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application provides a computer program product. The program product is stored in a storage medium. The program product is executed by at least one processor to implement the processes of the target image display method and the image content processing method in the foregoing embodiments, with the same technical effects achieved. To avoid repetition, details are not described herein again.

It should be noted that the terms "include", "comprise", or any of their variants are intended to cover a non-exclusive inclusion, such that a process, a method, an article, or an apparatus that includes a list of elements not only includes those elements but also includes other elements that are not expressly listed, or further includes elements inherent to such process, method, article, or apparatus. Without more constraints, an element preceded by "includes a..." does not preclude the presence of other identical elements in the process, method, article, or apparatus that includes the element. In addition, it should be noted that the scope of the methods and apparatuses in the embodiments of this application is not limited to functions being performed in the order shown or discussed, but may further include functions being performed at substantially the same time or in a reverse order, depending on the functions involved. For example, the described methods may be performed in an order different from the order described, and steps may be added, omitted, or combined. In addition, features described with reference to some examples may be combined in other examples.

Based on the foregoing description of the embodiments, persons skilled in the art can clearly understand that the methods in the foregoing embodiments can be implemented through software on a necessary hardware platform or certainly through hardware only, but in many cases, the former is the more preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific embodiments. These specific embodiments are merely for illustration rather than limitation. Inspired by this application, persons of ordinary skill in the art may develop many other forms without departing from the essence of this application and the protection scope of the claims, and all such forms shall fall within the protection scope of this application.

## Claims

1. A target image display method, comprising:
acquiring image content corresponding to a target image;
performing, according to a preset encoding rule, encoding conversion on the image content to generate a code corresponding to the image content;
acquiring a dot matrix font corresponding to the code; and
displaying the dot matrix font, wherein the dot matrix font forms the target image; wherein
the dot matrix font is obtained by performing data conversion on the image content in advance.

2. The display method according to claim 1, wherein the step of acquiring a dot matrix font corresponding to the code comprises:
acquiring a font name of the dot matrix font; and
determining the font name corresponding to the code and acquiring a dot matrix font corresponding to the font name; wherein
the font name is generated by naming the image content according to the preset encoding rule before performing data conversion on the image content.

3. The display method according to claim 2, wherein the image content comprises a dynamic image, the dynamic image comprising multiple image frames, wherein each of the image frames is subjected to data conversion in advance to generate a corresponding dot matrix font, and before each of the image frames is subjected to data conversion, each of the image frames is named within a continuous code range according to the preset encoding rule;
the step of acquiring a dot matrix font corresponding to the code further comprises:
acquiring dot matrix fonts corresponding to other font names that are within the same code range as the font name; and
the step of displaying the dot matrix font, wherein the dot matrix font forms the target image, comprises:
cyclically displaying in sequence, according to a display sequence of the multiple image frames, multiple dot matrix fonts respectively corresponding to the multiple image frames on a display.

4. The display method according to any one of claims 1 to 3, wherein the image content comprises multiple pixels, the dot matrix font comprises multiple pieces of pixel data, and the multiple pieces of pixel data are in one-to-one correspondence with the multiple pixels; and
the step of displaying the dot matrix font, wherein the dot matrix font forms the target image, comprises:
filling, according to an arrangement sequence of the multiple pixels, the pixel data corresponding to each of the pixels into a corresponding pixel position on the display.

5. The display method according to any one of claims 1 to 3, wherein before the acquiring image content corresponding to the target image, the display method further comprises:
specifying a file name for the image content according to a preset naming rule;
converting the image content into the dot matrix font; and
integrating the dot matrix font into a dot matrix font library; wherein
the dot matrix font comprises bitmap binary information, and the file name of the image content is in one-to-one correspondence with the bitmap binary information.

6. The display method according to claim 5, wherein the image content comprises a dynamic image, and the dynamic image comprises multiple image frames; and
the step of specifying a file name for the image content according to a preset naming rule comprises:
specifying, according to the preset naming rule, a file name for each of the image frames of the dynamic image within a continuous naming range.

7. A target image display apparatus, comprising:
a receiving module, configured to receive image content corresponding to a target image;
a conversion module, configured to perform, according to a preset encoding rule, encoding conversion on the image content to generate a code corresponding to the image content;
an acquisition module, configured to acquire a dot matrix font corresponding to the code; and
a display module, configured to display the dot matrix font, wherein the dot matrix font forms the target image; wherein
the dot matrix font is obtained by performing data conversion on the image content in advance.

8. The display apparatus according to claim 7, wherein the acquisition module is specifically configured to:
acquire a font name of the dot matrix font; and
determining the font name corresponding to the code and acquiring a dot matrix font corresponding to the font name; wherein
the font name is generated by naming the image content according to the preset encoding rule before performing data conversion on the image content.

9. The display apparatus according to claim 8, wherein the image content comprises a dynamic image, the dynamic image comprising multiple image frames, wherein each of the image frames is subjected to data conversion in advance to generate a corresponding dot matrix font, and before each of the image frames is subjected to data conversion, each of the image frames is named within a continuous code range according to the preset encoding rule;
the acquisition module is specifically configured to acquire dot matrix fonts corresponding to other font names that are within the same code range as the font name; and
the display module is configured to:
cyclically display in sequence, according to a display sequence of the multiple image frames, multiple dot matrix fonts corresponding to the multiple image frames on a display.

10. The display apparatus according to any one of claims 7 to 9, wherein the image content comprises multiple pixels, the dot matrix font comprises multiple pieces of pixel data, and the multiple pieces of pixel data are in one-to-one correspondence with the multiple pixels; and
the display module is specifically configured to:
fill, according to an arrangement sequence of the multiple pixels, the pixel data corresponding to each of the pixels into a corresponding pixel position on the display.

11. The display apparatus according to any one of claims 7 to 9, further comprising:
a naming module, configured to specify a file name for the image content according to a preset naming rule before receiving image content corresponding to the target image;
a conversion module, configured to convert the image content into the dot matrix font; and
an integration module, configured to integrate the dot matrix font into a dot matrix font library; wherein
the dot matrix font comprises bitmap binary information, and the file name of the image content is in one-to-one correspondence with the bitmap binary information.

12. The display apparatus according to claim 11, wherein the image content comprises a dynamic image, and the dynamic image comprises multiple image frames; and
the naming module is specifically configured to specify, according to the preset naming rule, a file name for each of the image frames of the dynamic image within a continuous naming range.

13. An electronic device, comprising a processor and a memory, wherein the memory stores a program or instructions capable of running on the processor, and when the program or instructions are executed by the processor, the steps of the method according to any one of claims 1 to 6 are implemented.

14. A readable storage medium, wherein the readable storage medium stores a program or instructions, and when the program or instructions are executed by a processor, the steps of the method according to any one of claims 1 to 6 are implemented.

15. A chip, wherein the chip comprises a processor and a communication interface, wherein the communication interface is coupled to the processor, and the processor is configured to run a program or instructions to implement the method according to any one of claims 1 to 6.

16. A computer program product, wherein the program product is stored in a storage medium, and the program product is executed by at least one processor to implement the method according to any one of claims 1 to 6.

17. An electronic device, wherein the electronic device is configured to perform the method according to any one of claims 1 to 6.
